# EUROPÄISCHE PATENTSCHRIFT

(11) **EP 2 411 763 B1**
(45) Veröffentlichungstag und Bekanntmachung des Hinweises auf die Patenterteilung: **08.04.2015**
(21) Anmeldenummer: 10703436.5
(22) Anmeldetag: 01.02.2010
(51) Int. Cl.: G01C 15/00, G02B 27/10, G02B 27/64, G02B 27/09, G02B 27/14

(54) **LASERMARKIERUNG MIT KOORDINATENSYSTEM**
LASER MARKING WITH COORDINATE SYSTEM
MARQUAGE LASER AVEC SYSTÈME DE COORDONNÉES

(30) Priorität: 26.03.2009 DE 102009001889
(43) Veröffentlichungstag der Anmeldung: 01.02.2012
(73) Patentinhaber: Robert Bosch GmbH, 70442 Stuttgart (DE)
(72) Erfinder: ZIMMERMANN, Thomas, 80639 Muenchen (DE)
(86) Internationale Anmeldenummer: PCT/EP2010/051151
(87) Internationale Veröffentlichungsnummer: WO 2010/108717

(56) Entgegenhaltungen:
- EP-A1- 1 519 147
- EP-A2- 1 067 422
- US-A1- 2004 194 328
- US-B2- 6 542 304

## Beschreibung

### Stand der Technik

Die Erfindung bezieht sich auf eine Lasereinheit zur Erzeugung eines Koordinatensystems.

Für diverse Vermessungs- und Ausrichtarbeiten gerade im Bau-, Installations-, und Gebäudebereich werden Lasersysteme verwendet, welche Bezugslinien erzeugen, um ein horizontales bzw. vertikales Bezugssystem zu erhalten.

Häufig wird bei diesen Systemen nur eine Laserstrahlquelle verwendet, deren Strahl durch optische Elemente aufgeteilt wird. Eine Strahlaufteilungin Teilstrahlen, welche ein kartesisches Koordinatensystem erzeugt, ist aus US 6,542,304 B2 bekannt. Bei diesem System wird der Laserstrahl auf ein optisches Element in Form eines Quadmirrors gerichtet, bei dem mehrere Spiegelflächen in unterschiedlichen Richtungen im Winkel von 45° zu dem Laserstrahl stehen, welcher somit in unterschiedliche Teilstrahlen um je 90° aufgeteilt wlrd. Nachteilig an einem derartigen System ist, dass das erzeugte Koordinatensystem in jeder der Achsen durch lediglich einen projektierbaren Punkt dargestellt wird.

Die US 2004/0194328 A1 offenbart ein "Light Altering Device", bei dem ein fokussierter Laserstrahl auf einen Glaszylinder oder ein Bündel von kapillaren Glaszylindern derart gelenkt wird, dass sich der Laserstrahl aufweitet und eine Laserebene ergibt, die senkrecht zur Zylinderachse des oder der Glaszylinder ausgerichtet ist. In einer Ausführungsform des "Light Altering Device", der US 2004/0194328 A1 wird das Licht der so erzeugten Laserebene über einen Parabolspiegel auf einen zylindrischen "Cone Mirror" umgelenkt, der seinerseits wiederum eine zur ursprünglichen Achse des Laserstrahls parallele Laserebene erzeugt.

Die EP 1 519 147 A1 offenbart einen optischen Strahlteiler für ein paralleles Lichtstrahlenbündel mit einem transparenten Zentralbereich und mehreren zur Strahlachse des Lichtstrahlenbündels jeweils um einen Reflektorwinkel geneigten, reflektierenden Reflektorflächen zur Erzeugung von je einem diskreten Punktstrahl, wobei der transparente Zentralbeteich des Strahlteilers zumindest stückweise prismatisch konvex gekrümmt ausgebildet ist und/oder eine strahlaufweitende diffraktive Optik aufweist.

Die EP 1 067 422 A2 offenbart einen Strahlteiler zur Aufspaltung eines Lichtstrahlenbündels in Teilstrahlenbündel. Der Strahlteiler der EP 1 067 422 A2 besitzt dazu eine Anzahl von reflektierenden Flächen, die im Strahlengang eines von einer Lichtquelle erzeugten, kollimierten, primären Lichtstrahlenbündels angeordnet sind. Die reflektierenden Flächen sind dabei gegenüber der Ausbreitungsrichtung des primären Lichtstrahlenbündels jeweils um 45° geneigt und spalten das auftreffenden primäre Lichtstrahlenbündel unter Erzeugung eines virtuellen kartesischen Achsensystems in senkrecht zueinander verlaufende Teilstrahlenbündel auf. Um unerwünschte Reflexionen und Spiegelungen zu vermeiden und genau definierte Teilstrahlenbündel erzeugen zu können, ist in der Vorrichtung der EP 1 067 422 A2 eine Vereinzelungseinrichtung vorgesehen, um das kollimierte, primäre Lichtstrahlenbündel bereits vor der Aufspaltung in die Teilstrahlenbündel in parallel zueinander verlaufende, primäre Einzelstrahlenbündel aufzuteilen. In einer Ausführungsvariante der Erfindung ist diese Vereinzelungseinrichtung eine zwischen der Lichtquelle und den reflektierenden Flächen angeordnete Lochblende. Die Lochblende weist dabei Durchgangsöffnungen auf, deren Zahl der Anzahl der reflektierenden Flächen vermehrt um 1 entspricht. Der Durchmesser der Durchtrittsöffnungen beträgt etwa 1,5 mm bis etwa 3 mm. Durch die Lochblende wird das primäre Lichtstrahlenbündel in parallel zueinander verlaufende, scharf voneinander abgegrenzte, primäre Einzelstrahleribündelzerlegt. Die primären Einzelstrahlbüridel gelangen anschließend zu dem im Strahlengang des primären Lichtstrahlenbündels angeordneten Strahlteiler. Durch die Lochblende erhält auch dieser Teil des primären Lichtstrahlenbündels einen weitgehend exakt definierten Durchmesser.

### Offenbarung der Erfindung

Aufgabe der vorliegenden Erfindung ist es, ein derartiges System zu verbessern.

Die erfinderische Aufgabe wird durch die Lasereinheit nach Anspruch 1 gelöst.

Hierbei erzeugt eine Laserstrahlquelle einen Laserstrahl, wobei der erzeugte Laserstrahl zunächst in einem DOE und/oder ROE modifiziert wird und der modifizierte Laserstrahl anschließend zumindest teilweise in einer Strahlablenkungseinrichtung derart umgelenkt wird, dass entstehende Teilstrahlen ein Koordinatensystem aufspannen. Dabei weist eine Projektion der Teilstrahlen eine durch die DOE und/oder ROE bedingte Strahlaufweitung auf. Das Koordinatensystem ist vorzugsweise ein rechtwinkliges zwei- oder dreidimensionales kartesisches System.

Ein DOE ist ein diffraktives optisches Element, bei dem auf einem Träger (z.B. Glas), bspw. über Fotolithografie Mikrostrukturen aufgebracht werden. In ihnen kommt es - wie bei einer Linse - durch unterschiedliche optische Weglängen der Teilstrahlen zu Phasenmodulationen, wodurch Interferenzmuster entstehen. Zusätzlich kann durch konstruktive und/oder destruktive Überlagerung die Amplitude moduliert werden. Über ein DOE ist es möglich, in praktisch beliebiger Weise einen Licht- oder bspw. Laserstrahl zu modifizieren, wie später noch näher erläutert wird.

Während ein DOE eine Veränderung des Strahls über Diffraktion, also Beugung bewirkt, so arbeitet ein ROE, also ein Refraktives Optisches Element, mittels Brechung. Brechung ist allgemein als eine Strahlumlenkung an einer Grenzfläche, wie bspw. einer Linse zu verstehen. Im Sinne dieser Anmeldung wird unter ROE aber nicht eine Linse im Allgemeinen verstanden, sondern refraktive optische Strukturen, deren Größen sehr klein sind und bspw. in der Größe an die Wellenlänge des Lichtes angepasst sind bzw. bis maximal zu Größen 1/10mm bis 1 mm-Bereich reichen. Derartige Strukturen werden auf einen vorzugsweise ebenen optischen Träger aufgebracht Ebenfalls wie mit einem DOE kann man mit einem ROE praktisch beliebige Strahlabwandlungen erzeugen. Ein ROE im Sinne dieser Erfindung könnte man auch als ein Mikro-Refraktives-Optisches-Element bezeichnen.

Wie später beim Ausführungsbeispiel im Detail erläutert wird, wird der Strahl des Lasers in unterschiedliche Teilstrahlen aufgeteilt, welche als Koordinatensystem auf eine jeweilig Bezugsfläche projektiert werden können. Ferner können zum besseren Erkennen des Koordinatensystems durch den Anwender diese projektierten Punkte modifiziert/aufgeweitet sein, so dass die Grundflächen des Koordinatensystems durch neben dem projektierten zentralen Punkt der Achsprojektion liegende Projektionspunkte angedeutet werden. Diese weiteren Projektionspunkte entstehen durch eine Modifikation des Strahls über DOE oder ROE. Dadurch dass die Durchleitung des Laserstrahls in der Reihenfolge vor der Strahlablenkungseinrichtung angeordnet wird, genügt ein einziges DOE oder ROE-Element, welches unterschiedliche Regionen besitzt, wobei jede dieser Regionen für einen Teil des Laserstrahls und somit für einen der Teilstrahlen zuständig ist. Hierdurch werden weniger Bauteile benötigt, was die Kosten senkt. Ferner ist es möglich, das einzige DOE oder ROE, das somit größer sein kann, genauer zu platzieren und auszurichten als eine Mehrzahl von entsprechenden Elementen die benötigt würden, wenn jeder erzeugte Teilstrahl einzeln entsprechend modifiziert würde.

In einer vorteilhaften Ausführungsform wird ein Teil des Laserstrahls durch die Strahlablenkungseinrichtung nicht abgelenkt. Die genannten Teilstrahlen des Laserstrahls sind dadurch entstanden, dass ihre entsprechenden Teile aus dem Strahl des Lasers durch die Strahlablenkungseinrichtung um je 90° in unterschiedliche Richtungen abgelenkt wurden. Das genannte Koordinatensystem ergibt sich aus den einzelnen Strahlen

Weiterhin ist vorteilhaft, wenn die Strahlaufweitung zumindest einer der Teilstrahlen in der Projektion eine Mehrzahl von Laserpunkten aufweist, die in Ebenen (bzw. Grundflächen) liegen, welche durch das Koordinatensystem aufgespannt werden. Bei der üblichen Verwendung der Lasereinheit ist sie kardanisch aufgehängt gelagert, so dass das Koordinatensystem horizontal und vertikal ausgerichtet ist. In einem gewissen Abstand von dem Laserpunkt, welcher die Koordinatenachse kennzeichnet, sind weitere Punkte (vorzugsweise mit geringerer Leuchtkraft) angeordnet, welche auch horizontal oder vertikal ausgerichtet sind und so den Benutzer bei seinen Ausrichtarbeiten unterstützen.

Alternativ kann die Strahlaufweitung/-modifikation von zumindest einem der Teilstrahlen in der Projektion eine Mehrzahl von Kreisen aufweisen, welche konzentrisch um die entsprechende Achse des Koordinatensystems verlaufen. Auf diese Weise wird der Anwender auf die Lage der Koordinatenachse hingewiesen.

Ferner ist es nicht notwendig, dass sämtliche Teilstrahlen eine durch die DOE und/oder ROE bedingte Strahlaufweitung aufweisen, sondern ein oder mehrere Teilstrahlen können alternativ durch das DOE/ROE nicht modifiziert werden. Da die Modifikation eine Strahlaufweitung bedeutet, wird dadurch die Leuchtstärke des projektierten Laserpunkts reduziert. Wenn also eine maximale Leuchtkraft bei einer gegebenen Laserstärke erreicht werden soll, kann auf die genannte Modifikation verzichtet werden.

Vorzugsweise wird durch die Strahlablenkungseinheit der modifizierte Laserstrahl in fünf Teilstrahlen aufgeteilt. Ein kartesisches Koordinatensystem weist drei orthogonale Achsen auf, welche jeweils vom Ursprung in positive und negative Richtungen ausgerichtet sind. Die Lasereinheit, die im Ursprung des Koordinatensystems liegt, hat also Strahlanteile, die in fünf der sechs möglichen Richtungen zeigen und somit fünf entsprechende Bezugspunkte für den Anwender liefert.

Bevorzugt kann die Strahlablenkungseinheit als Quadmirror ausgeführt sein. Ein Quadmirror ist eine optische Komponente, welche über vier entsprechend ausgerichtete Spiegelflächen die Umlenkung bewirkt. Hierbei ist es kostengünstig die Spiegelflächen in einem Bauteil zu integrieren, das dann einfach und kostengünstig zu fertigen und auszurichten ist. Es ist nicht notwendig einen Quadmirror zu verwenden, sondern es können sämtliche bekannten Mittel zur Strahlumlenkung verwendet werden, wie bspw. einzelne getrennte Spiegel, teildurchlässige Spiegel, Prismen oder ähnliches.

In einer weiteren Ausgestaltung der Erfindung modifiziert das DOE und/oder ROE den Laserstrahl über eine Änderung der Strahlrichtung im Winkelbereich der Ablenkung von kleiner als 5°. Vorzugsweise ist die Winkeländerung kleiner als 1°. Das heißt, dass der Laserstrahl im Gesamten kaum verändert wird, und der Laserstrahl trifft im Wesentlichen komplett auf die Strahlablenkungseinheit. Der Abstand von der Strahlablenkungseinheit zu einer Bezugsfläche (z.B. einer Wand), auf die die Teilstrahlen projektiert werden, ist üblicherweise relativ groß und kann mehrere Meter betragen. So sollte die Strahlablenkung der Modifikation nicht zu groß sein, da sonst der Abstand von dem projektierten zentralen Punkt, der die Achse des Koordinatensystems kennzeichnet, zu den modifizierten Strahlanteilen zu groß wäre und somit kaum noch erkennbar.

Vorzugsweise wird in der Lasereinheit exakt eine Laserstrahlquelle verwendet. Durch die beschriebene Verwendung von bspw. einem Quadmirror ist es möglich, den Strahl einer einzigen Laserstrahlquelle in etliche Teilstrahlen zu teilen, und hierdurch können Bauteilkosten gesenkt werden.

In einer weiteren Ausführungsform ist im Strahlengang zwischen dem DOE und/oder ROE und der Strahlablenkungseinrichtung eine Blende vorgesehen und die Blende weist insbesondere Längsschlitze auf. Die Strahlmodifikation an dem DOE und/oder ROE erzeugt auch nicht gewollte Streustrahlen, welche durch die Blende maskiert werden und so bei der Projektion klar umrissene Leuchtpunkte entstehen. Ferner können durch die Blende Beugungsmuster erzeugt werden, welche in der Projektion als Nebenmaxima erscheinen.

Die beschriebene Lasereinheit kann mit einer Selbstnivellierung versehen und so in einem Lasergerät verwendet werden. Die Selbstnivellierung kann im einfachsten Fall durch eine kardanische (Pendel-)Aufhängung der Lasereinheit geschehen oder mit einen entsprechenden motorischen Antrieb realisiert werden. Zusätzlich kann eine Dämpfung vorgesehen sein, welche den Einschwingvorgang in die Ziellage beschleunigt.

### Zeichnungen

Anhand der Zeichnungen wird die Erfindung nachstehend exemplarisch anhand von Ausführungsbeispielen eingehend erläutert. Die Beschreibung, die zugehörigen Figuren sowie die Ansprüche enthalten zahlreiche Merkmale in Kombination. Ein Fachmann wird diese Merkmale, insbesondere auch die Merkmale verschiedener Ausführungsbeispiele, auch einzeln betrachten und zu sinnvollen, weiteren Kombinationen zusammenfassen.

Es zeigen:
Fig. 1 eine perspektivische Laseranordnung mit einem Quadmirror,
Fig. 2 eine seitliche Ansicht der Lasereinheit,
Fig. 3 eine Projektion eines modifizierten Laserstrahls auf eine Oberfläche,
Fig. 4 einzelne Laserpunkte, welche in den Ebenen liegen, welche durch das Koordinatensystem aufgespannt werden und
Fig. 5. eine Draufsicht auf die Blende.

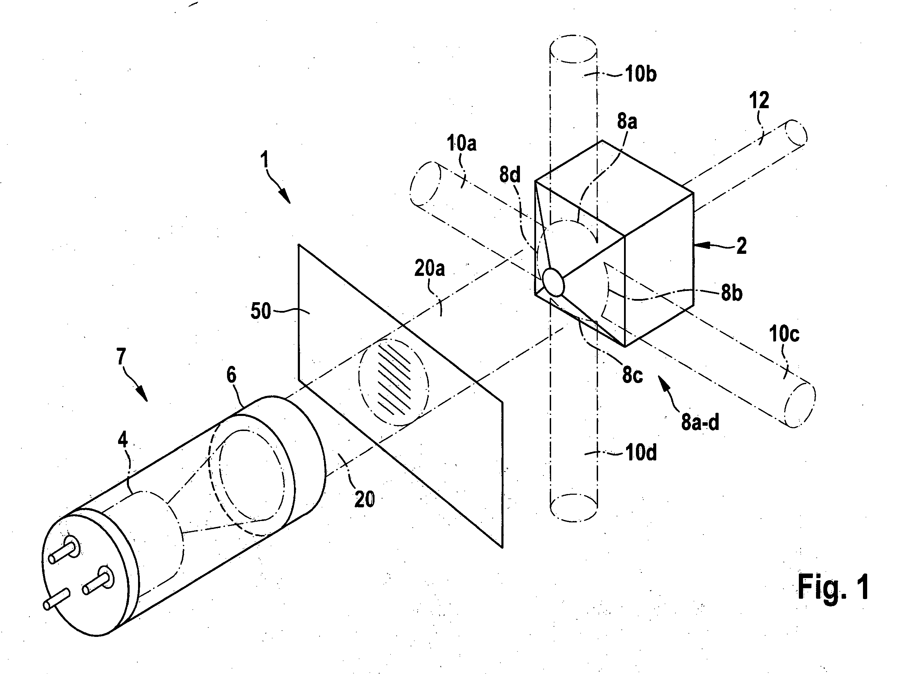

Fig. 1 zeigt eine Laserstrahlquelle 7, welche eine Laserdiode 4 und eine Kollimierlinse 6 umfasst und als eine Baugruppe ausgeführt ist. Im Sinne des besseren Verständnisses ist das Innere der Laserstrahlquelle 7 gestrichelt dargestellt. Das Licht, welches von der Laserdiode 3 erzeugt wird, ist ein aufweitender, also divergenter Strahl und wird durch die Kollimierlinse in einen kollimierten Laserstrahl 20 ausgerichtet. Dieser Laserstrahl 20 trifft auf ein DOE und/oder ROE 50.

Nachdem der Laserstrahl 20 das DOE oder ROE passiert hat, so ist er nicht mehr exakt kollimiert, sondern Anteile von ihm sind leicht abgelenkt bzw. modifiziert.

Im Folgenden trifft der modifizierte Laserstrahl 20a auf den Quadmirror 2. Der Quadmirror 2 ist als ein Körper aus einem optischen Element ausgeführt und weist vier verspiegelte Oberflächen 8a, 8b, 8c und 8d auf, welche im Wesentlichen dreieckförmig sind und im Winkel von 45° zur optischen Achse des Laserstrahls 20a stehen. An diesen verspiegelten Oberflächen 8a, 8b, 8c und 8d wird der Laserstrahl in vier Teilstrahlen 10a, 10b, 10c und 10d aufgespalten, wobei der Teilstrahl 10a koaxial zu Teilstrahl 10c und vor der Richtung entgegengesetzt ist. Entsprechend liegt der Teilstrahl 10b auf der gleichen Achse wie der Teilstrahl 10d nur in entgegen gesetzter Richtung. Teilstrahlen 10a und 10b liegen in einem Winkel von 90° in einer Ebene, welche senkrecht zur optischen Achse des Laserstrahls 20a ist.

Ein weiterer Teilstrahl 12 liegt auf der gleichen optischen Achse wie der Laserstrahl 20a. Dies wird entweder dadurch realisiert, dass die Oberfläche bei der der Laserstrahl 20a in den Quadmirror 2 eintritt, komplanar zu der entsprechenden Austrittsoberfläche ist und orthogonal zum Laserstrahl 20a liegt oder dadurch, dass der Quadmirror 2 eine Längsbohrung aufweist und der Teilstrahl 12 somit ein unmittelbarer Teil bzw. Verlängerung des Laserstrahls 20a ist.

Die Teilstrahlen 10a, 10b, 10c, 10d und 12 spannen 5 Achsen eines kartesischen Koordinatensystems auf.

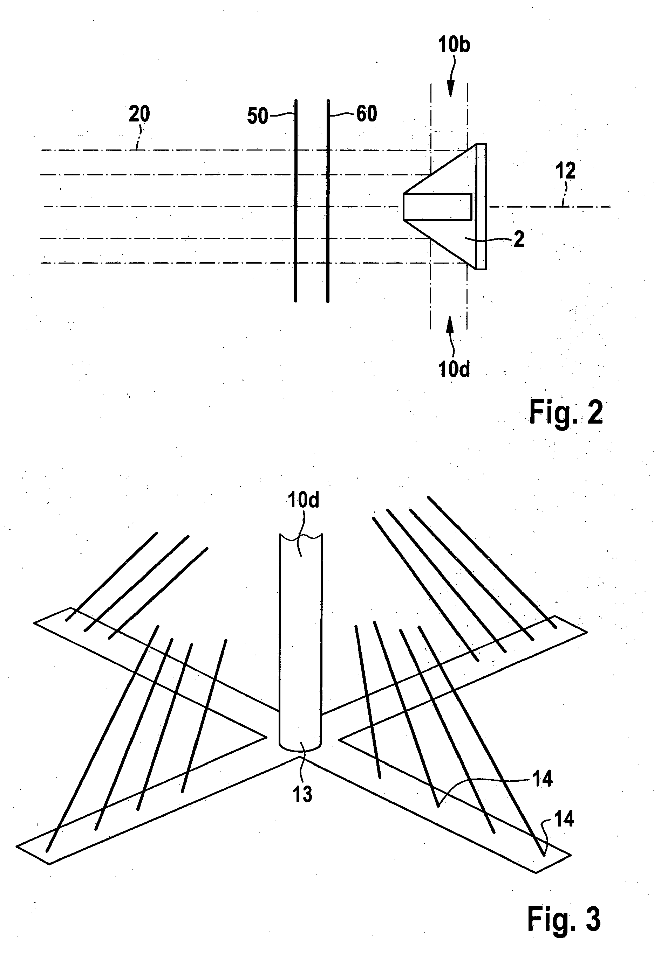

Fig. 3 zeigt den Teilstrahl 10d, welcher gemäß Fig. 1 nach unten zeigt und gemäß Fig. 3 auf den Boden trifft. Hier ist der Teilstrahl 10d mit einem relativ dicken Durchmesser dargestellt, was bedeuten soll, dass dieser Strahl einen projektierten zentralen Laserpunkt 13 mit relativ hoher Leuchtkraft erzeugt. Ferner sind Projektionen 14 als Anteile des Teilstrahls 10d dargestellt, welche kreuzförmig auf den Boden treffen, wobei die Winkellage des Kreuzes so ist, dass es in den Ebenen liegt, welche durch die Teilstrahlen 10a, 10b, 10c, 10d und 12 aufgespannt werden. Auch wenn in Fig. 3 ein Kreuz mit seinen Konturen dargestellt ist, ist hiermit vornehmlich gemeint, dass hier eine Mehrzahl von Projektionspunkte liegen. Alternativ zu einzelnen Punkten kann auch ein Kreuz gleichmäßiger oder nach außen hin abnehmender Leuchtkraft erzeugt werden.

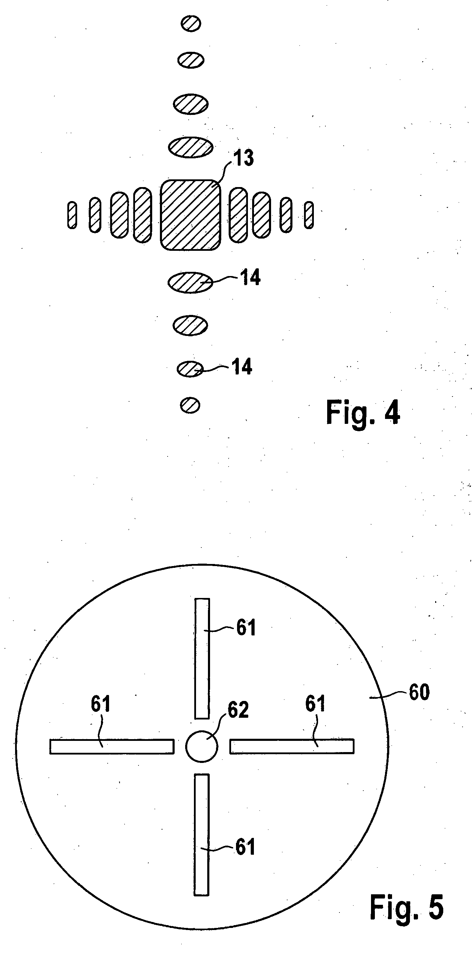

Diese hellen Projektionspunkte 14 dienen den Benutzer der Lasereiriheit 1 als Bezug für die Lage des Koordinatensystems. Fig. 4 zeigt die Projektionspunkte sowohl ober- und unterhalb vom zentralen Punkt 13, als auch links und rechts davon. Die Abstände können dabei unterschiedlich sein, wie auch ihre Entstehung zum einen über die DOE und/oder ROE, als auch über Beugung an einer Blende 60 möglich ist.

Derartige Bezugspunkte sind nicht nur bei dem Teilstrahl 10d, sondern auch bei jedem der anderen Teilstrahlen möglich. Die Projektionen 14 entstehen dadurch, dass Anteile des entsprechenden Teilstrahls leicht durch das DOE bzw. ROE abgelenkt wurden.

Neben der Erzeugung von Projektionspunkten 14 ist es auch möglich, um den zentralen Punkt 13, welche der Lage des Koordinatensystems entspricht, konzentrische Kreise zu erzeugen (nicht dargestellt), welche dazu dienen, die Aufmerksamkeit des Benutzers auf die Lage des zentralen Punkts 13 zu richten.

Zusätzlich kann eine Blende 60 gemäß Fig. 2 vorgesehen sein, welche den Laserstrahl 20a maskiert und zwischen dem DOE bzw. ROE 50 und dem Quadmirror 2 angeordnet ist. Ein Beispiel für eine Blende 60 bzw. Lochblende ist in Fig. 5 in der Draufsicht gezeigt. Die Blende 60 hat mittig zu dem Laserstrahl 20a ausgerichtet einen runden Durchlass 62 für den Teilstrahl 12. Ferner weist sie vier Längsschlitze 61 auf, welche für die Anteile des Laserstrahls 20a bestimmt sind, welche in dem Quadmirror 2 in die Teilstrahlen 10a, 10b, 10c und 10d umgewandelt werden. Der Durchmesser der Lochblende 60 ist vorzugsweise größer als der Durchmesser des Laserstrahls 20, bzw. 20a. Die Lochblende 60 bewirkt, dass Teile des Laserstrahls maskiert werden und so die projektierten Punkte 14 scharf begrenzt sind. Zusätzlich kann an den Kanten der Längsschlitze 61 eine Beugung auftreten, so dass beispielsweise ein Längsschlitz 61 der Lochblende 50, welcher horizontal ausgerichtet ist und somit gemäß Fig. 1 für einen der Teilstrahlen 10a oder 10c zuständig ist, bei der Projektion dieser Teilstrahlen über Beugung Nebenmaxima erzeugt, welche oberhalb bzw. unterhalb des entsprechenden Koordinatenachsenpunkt als zentralem Punkt 13 liegen.

Die Anordnung gemäß Fig. 1 besteht aus den drei Komponenten Laserstrahlquelle 7, dem DOE und/oder ROE 50, und dem Quadmirror 2. Gegebenenfalls wird zusätzlich die Blende 60 verwendet. Hierbei kann das DOE und/oder ROE 50 mit der Blende als eine Baugruppe integriert sein, welche ggf. mit der Laserstrahlquelle als eine einzige Komponente integriert ist. Diese Komponente kann in einem Gehäuse (nicht dargestellt) aufgenommen sein, in welchem auch der Quadmirror 2 aufgenommen ist. Alternativ kann auch die Laserstrahlquelle 7 mit dem DOE/ROE und dem Quadmirror 2 als eine Baugruppe ausgeführt sein.

## Patentansprüche

1. Lasereinheit (1) mit einer Laserstrahlquelle (7) zur Erzeugung eines Laserstrahls (20), sowie mit einer Strahlablenkungseinrichtung (2) zur Erzeugung vom Teilstrahlen (10a, 10b, 10c, 10d, 12) des Laserstrahl (20), sowie einem DOE, d.h. einem diffraktiven optischen Element, und/oder RÖE (50), d.h. einem refraktiven optischen Element, **dadurch gekennzeichnet, dass** der erzeugte Laserstrahl zunächst in dem DOE und/oder ROE (50) modifiziert wird und der modifizierte Laserstrahl anschließend zumindest teilweise in der Strahlablenkungseinrichtung (2) derart umgelenkt wird, dass entstehende Teilstrahlen (10a, 10b, 10c, 10d, 12) ein Koordinatensystem aufspannen, wobei eine Projektion der entstandenen Teilstrahlen auf eine Bezugsflache eine durch die DOE und/oder ROE bedingte Strahlaufweitung aufweist.

2. Lasereinheit (1) gemäß Anspruch 1, wobei ein Teil (12) des Laserstrahls durch die Strahlablenkungseinrichtung (2) nicht abgelenkt wird und die entstehenden Teilstrahlen (10a, 10b, 10c, 10d) um je 90° in unterschiedliche Richtungen gegenüber dem Laserstrahl (20) abgelenkt sind.

3. Lasereinheit gemäß einem der vorangegangenen Ansprüche, wobei die Strahlaufweitung zumindest einer der Teilstrahlen (10a, 10b, 10c, 10d, 12) in der Projektion eine Mehrzahl von Laserpunkten (13,14) aufweist, die in Ebenen liegen, welche durch das Koordinatensystem aufgespannt werden.

4. Lasereinheit gemäß einem der vorangegangenen Ansprüche, wobei die Strahlaufweitung zumindest einer der Teilstrahlen (10a, 10b, 10c, 10d, 12) in der Projektion eine Mehrzahl von Kreisen aufweist, welche konzentrisch um die entsprechende Achse des Koordinatensystems verlaufen.

5. Lasereinheit gemäß einem der vorangegangenen Ansprüche, wobei zumindest ein Teilstrahl keine durch die DOE und/oder ROE bedingte Strahlaufweitung aufweist.

6. Lasereinheit gemäß einem der vorangegangenen Ansprüche, wobei die Strahlablenkungseinheit (2) den modifizierten Laserstrahl in fünf Teilstrahlen aufspaltet.

7. Lasereinheit gemäß einem der vorangegangenen Ansprüche, wobei die Strahlablienkungseinheit als Quadmirror (2) ausgeführt ist.

8. Lasereinheit gemäß einem der vorangegangenen Ansprüche, wobei das DOE und/oder ROE (50) den Laserstrahl über Änderungen der Strahlrichtung im Winkelbereich von kleiner als 5°, vorzugsweise kleiner als 1° modifiziert.

9. Lasereinheit gemäß einem der vorangegangenen Ansprüche, wobei die Lasereinheit exakt eine Laserstrahlquelle (6) aufweist.

10. Lasereinheit gemäß einem der vorangegangenen Ansprüche **dadurch gekennzeichnet, dass** eine Blende (60), vorzugsweise eine Lochblende, im Strahlengang zwischen dem DOE und/oder ROE (50) und der Strahlablenkungseinrichtung (2) vorgesehen ist und die Blende (60) insbesondere Längschlitze aufweist.

11. Selbstnivellierendes Lasergerät mit einer Lasereinheit (1) nach einem der vorangegangenen Ansprüche.

12. Selbstnivellierendes Lasergerät nach Anspruch 111, **dadurch gekennzeichnet, dass** die Selbstnivellierung durch eine kardanische Aufhängung der Lasereinheit oder einen entsprechenden motorischen Antrieb realisiert wird.

## Claims

1. Laser unit (1) having a laser beam source (7) for generating a laser beam (20), and having a beam deflecting device (2) for generating partial beams (10a, 10b, 10c, 10d, 12) of the laser beam (20), and having a DOE, that is to a say a diffractive optical element, and/or an ROE (50), that is to say a refractive optical element, **characterized in that** the generated laser beam is firstly modified in the DOE and/or ROE (50), and the modified laser beam is subsequently deflected at least partially in the beam deflecting device (2) in such a way that resulting partial beams (10a, 10b, 10c, 10d, 12) define a coordinate system, a projection of the resulting partial beams onto a reference surface having a beam expansion conditioned by the DOE and/or ROE.

2. Laser unit (1) according to Claim 1, in which a portion (12) of the laser beam is not deflected by the beam deflecting device (2), and the resulting partial beams (10a, 10b, 10c, 10d, 12) are deflected in each case by 90° in different directions relative to the laser beam (20).

3. Laser unit according to one of the preceding claims, in which the beam expansion of at least one of the partial beams (10a, 10b, 10c, 10d, 12) in the projection has a plurality of laser points (13, 14) which lie in planes which are defined by the coordinate system.

4. Laser unit according to one of the preceding claims, in which the beam expansion of at least one of the partial beams (10a, 10b, 10c, 10d, 12) in the projection has a plurality of circles which run concentrically about the corresponding axis of the coordinate system.

5. Laser unit according to one of the preceding claims, in which at least one partial beam has no beam expansion conditioned by the DOE and/or ROE.

6. Laser unit according to one of the preceding claims, in which the beam deflecting unit (2) splits the modified laser beam into five partial beams.

7. Laser unit according to one of the preceding claims, in which the beam deflecting unit is designed as a quad-mirror (2).

8. Laser unit according to one of the preceding claims, in which the DOE and/or ROE (50) modifies the laser beam via changes in the beam direction in the angle range of less than 5°, preferably less than 1°.

9. Laser unit according to one of the preceding claims, in which the laser unit has exactly one laser beam source (6).

10. Laser unit according to one of the preceding claims, **characterized in that** an aperture (60), preferably an aperture plate, is provided in the beam path between the DOE and/or ROE (50) and the beam deflecting device (2), and the aperture (60) has, in particular, longitudinal slots.

11. Self-levelling laser device having a laser unit (1) according to one of the preceding claims.

12. Self-levelling laser device according to Claim 11, **characterized in that** the self-levelling is implemented by a cardanic suspension of the laser unit or by an appropriate motor drive.

## Revendications

1. Unité à laser (1) comprenant une source de rayon laser (7) destinée à générer un rayon laser (20), et comprenant aussi un dispositif de déflexion de rayon (2) destiné à générer des rayons partiels (10a, 10b, 10c, 10d, 12) du rayon laser (20), ainsi qu'un DOE, c'est-à-dire un élément optique diffractif, et/ou un ROE (50), c'est-à-dire un élément optique réfractif, **caractérisée en ce que** le rayon laser généré est tout d'abord modifié dans le DOE et/ou le ROE (50) et le rayon laser modifié est ensuite au moins partiellement dévié dans le dispositif de déflexion de rayon (2) de telle sorte que les rayons partiels (10a, 10b, 10c, 10d, 12) produits couvrent un système de coordonnées, une projection des rayons partiels produits sur une surface de référence présentant un élargissement des rayons causé par le DOE et/ou le ROE.

2. Unité à laser (1) selon la revendication 1, avec laquelle une partie (12) du rayon laser n'est pas déviée par le dispositif de déflexion de rayon (2) et les rayons partiels (10a, 10b, 10c, 10d) produits sont déviés respectivement de 90° dans différentes directions par rapport au rayon laser (20).

3. Unité à laser selon l'une des revendications précédentes, avec laquelle l'élargissement du rayon d'au moins l'un des rayons partiels (10a, 10b, 10c, 10d, 12) présente dans la projection une pluralité de points laser (13, 14) qui se trouvent dans des plans qui sont couverts par le système de coordonnées.

4. Unité à laser selon l'une des revendications précédentes, avec laquelle l'élargissement de rayon d'au moins l'un des rayons partiels (10a, 10b, 10c, 10d, 12) présente dans la projection une pluralité de cercles qui s'étendent de manière concentrique autour de l'axe correspondant du système de coordonnées.

5. Unité à laser selon l'une des revendications précédentes, avec laquelle au moins un rayon partiel ne présente aucun élargissement de rayon causé par le DOE et/ou le ROE.

6. Unité à laser selon l'une des revendications précédentes, avec laquelle le dispositif de déflexion de rayon (2) divise le rayon laser modifié en cinq rayons partiels.

7. Unité à laser selon l'une des revendications précédentes, avec laquelle le dispositif de déflexion de rayon est réalisé sous la forme d'un miroir parallélépipédique (2).

8. Unité à laser selon l'une des revendications précédentes, avec laquelle le DOE et/ou le ROE (50) modifient le rayon laser en modifiant la direction du rayon dans la plage angulaire inférieure à 5°, de préférence inférieure à 1°.

9. Unité à laser selon l'une des revendications précédentes, avec laquelle l'unité à laser présente exactement une source de rayon laser (6).

10. Unité à laser selon l'une des revendications précédentes, **caractérisée en ce qu'**un diaphragme (60), de préférence un diaphragme à trou, se trouve dans le trajet du rayon entre le DOE et/ou le ROE (50) et le dispositif de déflexion de rayon (2) et le diaphragme (60) présente notamment des fentes allongées.

11. Appareil laser à auto-nivellement équipé d'une unité à laser (1) selon l'une des revendications précédentes.

12. Appareil laser à auto-nivellement selon la revendication 11, **caractérisé en ce que** l'auto-nivellement est réalisé par une suspension à cardan de l'unité à laser ou par un mécanisme d'entraînement motorisé correspondant.
